# FASCICULE DE BREVET EUROPEEN

(11) **EP 0 973 782 B1**
(45) Date de publication et mention de la délivrance du brevet: **27.11.2002**
(21) Numéro de dépôt: 98913808.6
(22) Date de dépôt: 02.03.1998
(51) Int. Cl.: C07F 9/09, C07F 9/38, C07F 9/40, C08G 18/80, C09D 175/04

(54) **ISOCYANATES MODIFIES EN VUE DE LEUR DONNER UNE PROPRIETE TENSIOACTIVE, COMPOSITION EN CONTENANT, REVETEMENT EN RESULTANT**
MODIFIZIERTE ISOCYANATE MIT TENSIDEIGENSCHAFTEN, DIESE ENTHALTENDE ZUSAMMENSETZUNGEN UND DARAUS HERGESTELLTE BESCHICHTUNGEN
ISOCYANATES MODIFIED FOR BEING PROVIDED WITH SURFACTANT PROPERTY, COMPOSITION CONTAINING SAME, RESULTING COATING

(30) Priorité: 28.02.1997 FR 9702406; 28.02.1997 WO PCT/FR97/00359
(43) Date de publication de la demande: 26.01.2000
(73) Titulaire: RHODIA CHIMIE, 92408 Courbevoie Cédex (FR)
(72) Inventeur: BERNARD, Jean-Marie, F-69440 Mornant (FR); JEANNETTE, Thierry, F-92380 Garches (FR); NABAVI, Minou, F-75014 Paris (FR)
(74) Mandataire: Ricalens, François
(86) Numéro de dépôt international: FR9800405
(87) Numéro de publication internationale: WO98038196

(56) Documents cités:
- FR-A- 1 278 286

## Description

La présente invention a pour objet une famille d'isocyanates modifiés en vue de leur donner une propriété tensioactive.

La présente invention a pour objet des composés et des compositions à base d'isocyanate (qui peuvent être partiellement masqués, mais cela n'est pas la mise en oeuvre préférée). Elle vise également leur procédé d'utilisation, leur utilisation pour réaliser des revêtements et revêtements ainsi obtenus. Elle concerne plus particulièrement les compositions (auto)dispersables en phase aqueuse.

Pour mieux comprendre l'invention il a paru opportun de faire les rappels suivants.

Dans la présente description, les caractéristiques de granulométrie font souvent référence à des notations du type dₙ où n est un nombre de 1 à 99, cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse, puisque le poids n'est pas une quantité de matière mais une force) des particules soit inférieur ou égal à ladite taille.

Dans la suite de la description, on utilisera l'indice de polydispersité, lequel est défini comme I = (d₉₀-d₁₀)/d₅₀

Dans l'activité des peintures et des vernis, on utilise largement les diisocyanates notamment les alcoylène diisocyanates (par exemple ceux vendus sous la marque Tolonate) et leurs dérivés de type biuret ou leurs trimères.

Toutefois, deux problèmes restent à ce jour incomplètement résolus, à savoir :
- l'utilisation de solvant organique, dont la présence est réputée toxique et néfaste pour l'environnement ;
- la nécessité de mettre sur le marché des produits non volatils qui a conduit à alourdir les molécules et ce en oligomérisant les diisocyanates ; cette solution n'est pas entièrement satisfaisante car elle utilise une fonction élaborée, donc chère, pour résoudre le problème.

Bien entendu, ces problèmes doivent être résolus en respectant les contraintes intrinsèques aux revêtements.

Pour réaliser des films de peintures ou de vernis, on mélange d'une part une dispersion, ou une émulsion, contenant l'isocyanate qui peut être bloqué et d'autre part une dispersion ou une solution de polyol.

Le mélange des dispersions pouvant également contenir des pigments, et notamment du bioxyde de titane, dont la dispersion est améliorée par la présente invention, et des charges est alors déposé sur un support sous forme d'un film à l'aide des techniques classiques de mise en oeuvre des peintures industrielles. Lorsque la préparation contient des isocyanates bloqués, l'ensemble film plus support est cuit à une température suffisante pour assurer le déblocage des fonctions isocyanates et la condensation de celles-ci avec des groupements hydroxyles des particules de polyol. Il convient toutefois de rappeler que les produits masqués ou bloqués présentent un prix de revient significativement plus élevé que celui des produits non masqués.

L'utilisation de solvants organiques est de plus en plus souvent critiquée par les autorités en charge de la sécurité du travail, car ces solvants, ou du moins certains d'être eux, sont réputés toxiques ou chronotoxiques. C'est la raison pour laquelle on essaye de développer de plus en plus des techniques qui se substituent aux techniques en milieu solvant pour pallier les inconvénients afférents aux solvants.

Une des solutions les plus souvent utilisées réside dans l'utilisation d'émulsions ou de dispersions dans l'eau. En raison de la réactivité de l'eau avec les isocyanates, cette solution est surtout utilisée pour les isocyanates masqués.

Pour ne pas tomber de Charybde en Scylla, un écueil majeur est à éviter, à savoir détériorer une ou plusieurs des qualités essentielles des revêtements [caractère lisse (éviter la "peau d'orange"), dureté, résistance aux solvants,.....], en particulier, il faut craindre une mauvaise adhésion du revêtement sur son support. En effet beaucoup de tensioactifs sont réputés altérer la solidité du lien entre le revêtement et son support et sont connus et utilisés pour défavoriser l'accrochage entre un polymère et un support.(confère par exemple DE-OS 3.108.537).

Lorsque l'on utilise des isocyanates non ou incomplètement masqués, la durée pendant laquelle ils sont utilisables reste inférieure à quelques heures, en général une ou deux heures.

Aussi est-il important de ne pas rencontrer de difficulté lors de la mise en émulsion ou en dispersion des isocyanates.

C'est pourquoi un des buts de la présente invention est de fournir un composé et une composition qui permette par mélange dans l'eau ou plus précisément dans une phase aqueuse, d'obtenir une émulsion sans qu'il soit pour cela nécessaire d'utiliser des techniques et/ou des installations spécifiques.

Un autre but de la présente invention est de fournir un composé et une composition du type précédent qui ne perturbe pas les opérations de revêtement.

Un autre but de la présente invention est de fournir un composé et une composition du type précédent dont la teneur en solvant soit inférieure à 1/5, avantageusement à 1/10, en masse de ladite composition. Bien sûr il est préférable qu'il n'y en ait le moins possible, et même pas du tout.

Ces buts et d'autres qui apparaîtront par la suite sont atteints au moyen de composés de formule (I) et de compositions, où elles comportent au moins un composé de formule (I) 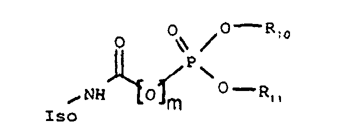
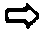 où m est égal à zéro ou avantageusement à 1.
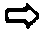 où Iso est le reste d'un polyisocyanate (après élimination d'une fonction isocyanate)
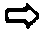 où R₁₀ est choisi parmi :
   → une charge négative ;
   → un reste hydrocarboné (c'est-à-dire contenant des atomes d'hydrogène et de carbone) dont le point d'attache [c'est-à-dire l'atome porteur de la liaison ouverte] est un carbone
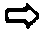 où R₁₁ est choisi parmi :
   → une charge négative ;
   → un groupe de formule II : 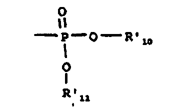
dans laquelle R'₁₀ est choisi parmi les restes hydrocarbonés (semblables ou différents de R₁₀) et une charge négative dont le point d'attache [c'est-à-dire l'atome porteur de la liaison ouverte] est un carbone
dans laquelle le(s) R'₁₁ est (sont) choisi(s) parmi les restes hydrocarbonés dont le point d'attache [c'est-à-dire l'atome porteur de la liaison ouverte] est un carbone (semblables ou différents de R₁₀ et de R'₁₁) et une charge négative.

Quoique cela ne fasse pas partie des composés préférés, II convient de noter que lorsque les substituants organiques, semblables ou différents, (R₁₀ ; R'₁₁ ; R'₁₀) ne comportent pas de fragment de chaîne polyéthylène glycol, il est préférable qu'ils soient alcoyles de C₈ à C₁₂, avantageusement ramifiés, ou un aralcoyle de C₁₂ à C₁₆ ou un alcoyle aryle de C₁₀ à C₁₄.

Il est souhaitable qu'au moins un des substituants organiques, semblables ou différents, (R₁₀ ; R'₁₁ ; R'₁₀) comporte un fragment de chaîne polyéthylène glycol avantageusement d'au moins 5, de préférence d'au moins 7 unités éthylènyloxyles. En d'autres termes, il est souhaitable qu'au moins un des substituants organiques, réponde à la de même formule que les substituants de E dans la formule générale I. Plus spécifiquement au moins un des substituants organiques (R₁₀ ; R'₁₁ ; R'₁₀) répond à la formule 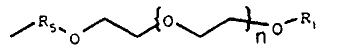 où R₅ représente un bras comportant au plus deux chaînons carbonés où n est un entier choisi entre 0 et 30 avantageusement entre 5 et 25, de préférence entre 9 et 20 (intervalles fermés c'est à dire comprenant les bornes) ;
où R₁ représente un radical hydrocarboné, avantageusement choisi parmi les aryles et les alcoyles éventuellement substitués.

Ladite partie lipophile R₁ est en général choisie parmi les groupes alcoyles [dans la présente description ALCO-yle est pris dans son sens étymologique de reste hydrocarboné d'un ALCO-ol après ignorance de la fonction alcool (ou ol)] ; et aryles. Lorsque le nombre de fonction éthylène glycol est au plus égale à 5, les alcoyles simples sont avantageusement ramifiés, avantageusement de C₈ à C₁₂, les aralcoyles C₁₂ à C₁₆, les alcoylaryles de C₁₀ à C₁₄ et les aryles simples sont des C₁₀ à C₁₆ Sinon la partie lipophile peut varier largement surtout lorsque le nombre de motifs éthylène glycol est au dessus de 10, elle peut ainsi constitué un radical hydrocarboné d'au moins 1, avantageusement d'au moins 3 et comportant au plus 25 avantageusement au plus 20 atomes de carbone.

Il est avantageux que le radical Iso procure majoritairement ou en totalité un lien aliphatique avec les même préférence que celles exposées ci-dessus à propos des isocyanates.

Ces composés sont issus de la condensation avec décarboxylation des isocyanate avantageusement aliphatique avec des phosphates et de l'acide phosphorique partiellement neutralisés.

Font donc également partie de l'invention les composés de formule : 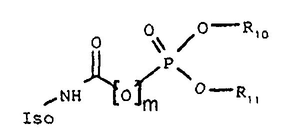 dans laquelle R₁₀ et R₁₁ peuvent prendre les valeurs ci dessus mais aussi quand m est 1, être une charge négative en raison du fait que dans certain lot il peut y avoir des quantités significatives d'acide phosphorique résiduel.
Bien sur alors R₁₀ peut aussi valoir :

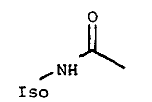

Le radical Iso pouvant ou non être alors le même que celui de l'avant dernière formule.

Dans laquelle Iso représente le reste d'un polyisocyanate, avantageusement d'un produit de réaction d'un monomère diisocyanate pour former du biuret ou des isocyanurates (trimère), ou avec un di- ou poly-ol avantageusement un triol ou un tetra-ol.

Il est avantageux que le radical Iso procure majoritairement ou en totalité un lien aliphatique avec les mêmes préférences que celles exposées ci dessus à propos des isocyanates.

Avantageusement Iso porte, outre la fonction figurée sur la formule au moins une, de préférence au moins deux fonctions isocyanates, dont, de préférence, au moins une n'est pas masquée, et dont, plus préférentiellement, au moins deux ne sont pas masquées.

Toutefois selon un mode préféré de la présente invention il a été montré qu'il pouvait être intéressant de remplacer en grande partie et même en totalité les fonctions isocyanates par celles spécifiées ci-dessus. On obtient ainsi un composé à la fois stable et inerte vis à vis des compositions isocyanates, qui peuvent être ajoutée sans précaution particulière au compositions isocyanates.

Les isocyanates préférées pour la réaction complète ci dessus sont les isocyanate à faible viscosités, notamment aliphatique. en particulier on peut citer le simple monomère de préférence de polyméthylènediisocyanates et avantageusement l'hexaméthylène diisocyanate . et les dérivés de la réaction de "trimérisation qui donne des di-, tri-, tétra-, penta-, hexa-, ou heptafonctionnels en isocyanate, avantageusement trifonctionnel.

La présente invention a aussi pour objet des compositions comportant au moins un composé de formule (I).

Plus précisément elles comportent notamment :
→ une sous composition vecteur de fonctions isocyanate dont les caractéristiques préférées seront précisée ultérieurement et
→ un agent tensioactif contenant au moins un composé de formule (I) ;
→ optionnellement une phase aqueuse.

Ainsi selon une variante avantageuse de la présente invention, les compositions selon la présente invention présente des composés issus de la réaction exposées ci-dessus dans une proportion globale, par rapport à un volume d'un litre d'isocyanate, de 0,01 à 1, avantageusement de 0,05 à 0,5, de préférence de 0,05 à 0,3 équivalent de fonction : 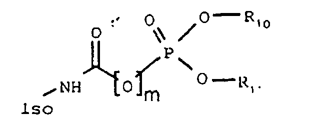
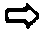 où m est égal à zéro ou 1 ;

Selon la présente invention, ledit composé peut-être utilisé seul, ou en mélange avec un ou plusieurs agents tensioactifs. Ces derniers peuvent être des agents répondant aussi à la formule (I).

Ces éventuels agents tensioactifs peuvent également être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl--phosphonate, -phosphinate, sulfonate, sel d'acide gras et/ou zwitterionique] et parmi les composés non-ioniques ceux bloqués en bout de chaîne ou non. (toutefois les composés non ioniques présentant des fonctions alcooliques sur au moins l'une des chaînes semblent avoir un effet légèrement défavorable sur l'(auto)émulsion même si ils ont un effet favorable sur d'autres aspects de la composition pour peinture ; compte tenu de cela il est préférable que la teneur en ce type de composé représente au plus un tiers, avantageusement au plus un cinquième, de préférence au plus un dixième en masse desdits composés anioniques selon l'invention)

Le contre-cation est avantageusement monovalent et est choisi parmi les cations minéraux et les cations organiques avantageusement non nucléophiles et par voie de conséquence de nature quaternaire ou tertiaire (notamment oniums de colonne V tels que phosphonium, ammoniums, voire de colonne VI tels que sulfonium, ...) et leurs mélanges, le plus souvent ammoniums, en général issus d'une amine, avantageusement tertiaire. Avantageusement, on évite que le cation organique présente un hydrogène réactif avec la fonction isocyanate. D'où la préférence vis-à-vis des amines tertiaires.

Les cations minéraux peuvent être séquestrés par des agents de transfert de phases comme les éthers couronnes.

Le pKa des cations (organique [ammonium ...] ou minéraux) est avantageusement compris entre 8 et 12.

. Les cations et notamment les amines correspondant aux ammoniums ne présentent avantageusement pas de propriété tensioactive mais il est souhaitable qu'elles présentent une bonne solubilité en tout cas suffisante pour assurer celle desdits composés de formule (I)anionique et avantageusement un fragment de chaîne polyéthylène glycol, en phase aqueuse et ce à la concentration d'emploi. Les amines tertiaires présentant au plus 12 atomes, avantageusement au plus 10 atomes, de préférence au plus 8 atomes de carbone par fonction "onium" (rappelons qu'il est préféré qu'il n'y en ait qu'une par molécule) sont préférées. Les amines peuvent comporter d'autre fonction et notamment les fonctions correspondant aux fonctions des acides aminés et des fonctions éther cyclique comme la N-méthylmorpholine, ou non. Ces autres fonctions sont avantageusement sous une forme qui ne réagisse pas avec les fonctions isocyanates et ne altèrent significativement pas la solubilité en phase aqueuse.

Il est très souhaitable que les composés anioniques selon la présente invention soient sous une forme neutralisée telle que le pH qu'elle induit lors d'une dissolution ou d'une mise en contact dans l'eau soit compris au moins égal à 3, avantageusement à 4, de préférence à 5 et au plus égal à 12, avantageusement à 11, de préférence à 10.

Le rapport massique entre les composés tensioactifs (y compris ledit composé de formule (I)) et les isocyanates est très préférablement compris entre 4 et environ 10%. les zones préconisées seront explicitée ultérieurement.

La composition peut comporter en outre un catalyseur avantageusement latent (libérable par action des agents extérieurs, par exemple rayonnement visible ou U.V., oxygène).

La composition d'isocyanate selon l'invention peut comporter après mise en dispersion ou émulsion dans une phase aqueuse, une teneur en eau de 10 à 70%. L'émulsion est une émulsion huile dans eau.

Toutefois, au cours de l'étude qui a mené à la présente invention, en particulier dans le cas des isocyanates aliphatiques (c'est-à-dire reliés au squelette hydrocarboné (c'est-à-dire contenant à la fois de l'hydrogène et du carbone) par l'intermédiaire d'un carbone saturé (sp³) II a été montré qu'il avait un risque d'emballement de diverses réactions lorsque certaines proportions d'eau était atteinte, Aussi est-il avisé d'éviter des compositions où le rapport massique entre d'une part la quantité d'eau dans la phase aqueuse et d'autre part la somme de l'isocyanate et du tensioactif selon l'invention, est compris entre 10⁻² et un demi. Si l'on désire plus de sûreté on évitera les rapports compris entre 10⁻³ et 1.

Les émulsions obtenues présentent pour la partie isocyanate des d₅₀ au moins égal à 0,1 micromètre, plus souvent à 0,5 micromètre et elles présentent un d₅₀, préférentiellement un d₈₀, avantageusement ≤ (au plus égal à) 5 micromètres, de préférence à 3 micromètres.

La phase aqueuse de l'émulsion, sert en général de vecteur des co-réactifs polycondensables avec les fonctions isocyanates et comporte alors des composés présentant des fonctions (avantageusement au plus 4, de préférence au plus 3 fonctions cf. ce qui est expliqué ci après pour les polyol qui général mutatis mutandis à toutes les fonctionnalité de ce type) à hydrogènes réactifs, en général un ou plusieurs polyols.

Ce polyol est un polymère qui contient au moins 2 groupements hydroxyles (phénol ou alcool) ayant avantageusement un taux d'hydroxyle entre 0,5 et 5, avantageusement entre 1 et 3% (en masse). sauf dans le cas des latex qui sera rappelé ci-après, Il comporte avantageusement au plus 4, de préférence au plus 3 fonctions alcools primaires (mais le plus souvent deux car la réticulation proprement dite [provoquée par une fonctionnalité statistiquement supérieure à deux (valeur fractionnaire possible)] est en général engendrée par les polyisocyanates). Mais il peut comporter en outre des fonctions alcooliques secondaire ou tertiaire (en général au plus environ 10, avantageusement au plus 5, plus souvent au plus deux) qui, en général, ne réagissent pas ou ne réagissent qu'après les primaires, et ce dans l'ordre primaire, secondaire et tertiaire.

Les polyoses ou polyosides (amidon, cellulose, gommes (guar, caroube, xanthane,....) diverses....) surtout sous forme solide sont à éviter. Sous la forme d'agent texturant, et dans la mesure où cela ne gène pas la mise en émulsion et la stabilité de cette dernière, il peuvent toutefois être utilisés pour donner des propriétés particulières (Par exemple thyxotropie....). Le squelette du polymère peut être de nature chimique diverse notamment acrylique, polyester, alkyde, polyuréthanne, voire amide, y compris urée.

Le polyol peut comporter des groupements anioniques, notamment carboxyliques ou sulfoniques ou ne pas comporter de groupement ionique.

Dans le cadre de la présente invention, il a été montré que la présente de fonction carboxylate anionique (-CO₂⁻) augmentait significativement la cinétique de séchage ce qui est particulièrement intéressant pour obtenir un "hors poussière" rapide, notamment lorsque l'on opère à l'extérieur. Un effet significatif peut être noté pour un rapport d'au moins d'une fonction carboxylique pour environ 20 fonctions à hydrogène réactif [fonction alcool ou phénol], avantageusement pour un rapport d'un pour environ 10, de préférence pour un rapport d'un pour environ 5 ; il est toutefois souhaitable que ce rapport soit au plus égale à une fonction pour une fonction, de préférence d'un fonction carboxylique pour deux fonctions ol. Les contre cations des carboxylates répondent avantageusement aux mêmes préférences que celles exprimées pour les contre cations du composé selon la présente invention.

Le polyol peut déjà être en milieu aqueux ou hydrosoluble ou hydrodispersable.

Il peut s'agir d'une solution aqueuse (qui peut notamment être obtenue après neutralisation des groupements ioniques) ou d'une émulsion du polymère dans l'eau ou d'une dispersion de type latex.

Il semble possible de disperser un polyisocyanate standard dans un polyol hydrosoluble dans certaines conditions de formulation (notamment avec un rapport pigment sur liant de la peinture adapté). Mais l'utilisation de polyisocyanates standards avec des polyols hydrodispersés (types émulsion de résine ou latex), pose souvent des problèmes d'incompatibilité (floculation, apparition de plusieurs phases...). Un des nombreux avantages de la préparation selon l'invention est qu'elle offre une grande liberté de choix pour la formulation (forme physique du polyol, rapport pigment sur liant, facilité d'incorporation dans les milieux aqueux).

D'autre part il a été constaté au travers des valeurs d'usages des revêtements (notamment résistance chimique et dureté) que la réticulation des films était beaucoup plus importante quand le polyol utilisé était carboxylé.

En particulier on peut utiliser avantageusement les latex, notamment les nanolatex (c'est-à-dire latex dont la taille particulaire est nanométrique [plus précisément dont le d₅₀ est au plus égal à environ 100 nanomètres]).

Ainsi, selon une des mises en oeuvre particulièrement avantageuses de la présente invention, le polyol est avantageusement un latex de taille nanométrique présentant les caractéristiques suivantes :
- d₅₀ compris entre 15 et 60 nm, avantageusement entre 20 et 40 nm
- fonction carboxylate de 0,5 à 5% en masse
- fonction ol : entre 1 et 4% avantageusement entre 2 et 3%
- taux de solide : entre 25 et 40%
- un d₈₀ inférieur à 1 micromètre.

En outre les latex, surtout quand leur point de transition vitreuse est inférieur à 0°C, avantageusement à -10°C, de préférence à -20°C, permettent l'obtention même avec des isocyanates aromatiques de bonne qualité de résistance aux intempéries et notamment aux variations de température.

Le rapport molaire entre les fonctions isocyanates libres et les fonctions hydroxyle est compris entre 0,5 et 2,5, avantageusement entre 0,8 et 1,6, avantageusement entre 1 et 1,4.

Les latex (non fonctionnalisés en isocyanate éventuellement masqués) décrits dans la demande de brevet d'invention français déposé le 28 avril 1995 N° 95/05123 et dans la demande réflexe de brevet Européen N°EP 0.739.961 donnent de forts bons résultats.

Ainsi avantageusement les particules de latex présentent une teneur en fonction acide (avantageusement carboxylique), accessible comprise entre 0,2 et 1,2 milliéquivatent/gramme de matière solide et qu'elles présentent une teneur en fonction alcoolique accessible comprise entre 0,3 et 1,5 milliéquivalent/gramme.

Ainsi, comme indiqué dans ce document sont préférés les latex constitués de particules porteuses de fonction(s) selon l'invention, sont hydrophobes et possèdent avantageusement une taille (d₉₀) généralement comprise entre 0,01 micromètre et 10 micromètres et de préférence au plus égale à 5 micromètres, voire à 2 micromètres. Elles sont calibrées, monodispers(é)es et présentes dans le latex à raison d'une quantité variant entre 0,2 à 65% en poids du poids total du latex.

La masse moléculaire moyenne en poids (M_{w} déterminée de préférence par chromatographie de perméation de gel, connue sous l'acronyme anglo-saxon de "GPC") des polymères constitutifs des particules de la population A (latex à fonction ol jouant le rôle de polyol) est avantageusement comprise entre 5.10⁴ et 5.10⁶, de préférence 1,1 10⁵ et 2.10⁶.

Les fonctions alcooliques ou les fonctions acides, de préférence carboxyliques peuvent être également obtenues par hydrolyse de fonctions alcoologènes (ester, éther, halogénure ...) ou de fonctions acidogènes (ester, anhydride, chlorure d'acide, amide, nitrile ...).

La répartition entre les différents types de motifs répond avantageusement aux règles suivantes :

La teneur en motif issu du monomère constitué par ledit alcool libre présentant une fonction éthylénique activée, et rapportée à la totalité des motifs de toute sorte, est avantageusement comprise entre 3 et 15%, de préférence entre 4 et 10% (mole, ou équivalent).

Selon un mode avantageux de la présente invention, le motif est issu d'un ester, d'un acide alpha éthylénique, avec un diol dont une des fonctions alcool reste non estérifiée. Ledit diol est avantageusement un diol oméga/oméga prime, avantageusement choisi parmi le butanediol-1,4, le propane diol-1,3 et le glycol.

Il est souhaitable que ledit acide alpha éthylénique soit un acide acrylique éventuellement substitué.

Selon un mode préféré de la présente invention, la teneur en motif issue d'un acide carboxylique libre (ou sous forme d'un de ses sels), et rapportée à la totalité des motifs de toute sorte, est comprise entre 2 et 10% (mole).

Pour des raisons économiques, il est souvent avantageux que ledit acide libre soit un acide acrylique éventuellement monosubstitué ou un de ses sels.

Les particules issues de la présente invention peuvent être constituées de deux polymères distincts, le premier constituant le coeur et le second constituant la périphérie. Ce type de particule peut être obtenu par épipolymérisation [où une semence de latex est recouverte par polymérisation superficielle (épipolymérisation, parfois désignée par surpolymérisation)] d'un polymère distinct. Le coeur est parfois appelé germe par analogie au phénomène de cristallisation. Dans ce cas là, seul le deuxième polymère, c'est-à-dire le polymère superficiel, répond aux contraintes de concentration aux différentes fonctions selon la présente invention.

Ces éventuels agents tensioactifs peuvent également être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl--phosphonate, -phosphinate, sulfonate, sel d'acide gras et/ou zwitterionique] et parmi les composés non-ioniques ceux bloqués en bout de chaîne ou non. (toutefois les composés non ioniques présentant des fonctions alcooliques sur au moins l'une des chaînes semblent avoir un effet légèrement défavorable sur l'(auto)émulsion même si ils ont un effet favorable sur d'autres aspects de la composition pour peinture ; compte tenu de cela il est préférable que la teneur en ce type de composé représentent au plus un tiers, avantageusement au plus un cinquième, de préférence au plus un dixième en masse desdits composés de formule (I) selon l'invention)

Selon une mise en oeuvre particulièrement avantageuse de la présente invention, après mise en dispersion ou émulsion, la somme des constituants du liant (c'est-à-dire des teneurs en masse du, ou des, isocyanates, des émulsifiants et des polyols), dans l'eau varie de 30 à 70% par rapport à la totalité de la composition.

Les isocyanates visés par l'invention comporte notamment les composés détaillés ci après.

Ces composés peuvent avantageusement contenir les structures courantes dans ce domaine par exemple les prépolymères issus de la condensation de polyol (Par exemple triméthylol propane) en général triol (avantageusement primaire voire plus loin sur la définition des polyols) et surtout les plus courantes, à savoir celles de type isocyanurate, encore appelée trimère, des structures urétidine dione, encore appelée dimère, des structures biuret ou allophanate ou une combinaison de ce type de structures sur une seule molécule ou en mélange.

Si l'on désire abaisser fortement la teneur en solvant de la composition, notamment lorsqu'elle sous forme d'émulsion, il est préférable d'utiliser des mélanges de ce type naturellement (c'est-à-dire sans adjonction de solvant) à basse viscosité. Les composés présentant cette propriété sont surtout les dérivés (type isocyanurate, encore appelée trimère, des structures urétidine dione, encore appelée dimère, des structures biuret ou allophanate ou une combinaison de ce type de structures sur une seule molécule ou en mélange) en partie et/ou en totalité des isocyanates aliphatiques dont les fonctions isocyanate sont reliées au squelette par l'intermédiaire de fragments éthylène (Par exemple des polyméthylènediisocyanates, notamment l'hexaméthylènediisocyanate et ceux des arylènedialcoylènediisocyanates dont la fonction isocyanate est distante des noyaux aromatique d'au moins deux carbones tels que (OCN-[CH₂]ₜ-Φ-[CH₂]ᵤ-NCO) avec t et u supérieur à 1). Ces composés ou mélanges ont avantageusement un viscosité au plus égale à environ 3000 centipoises (ou millipascal.seconde), de préférence à environ 1500 centipoises (ou millipascal.seconde).

Lorsque ces valeurs ne sont pas atteintes Il est alors souvent utile d'amener le mélange à ces valeurs de viscosité par l'adjonction d'une quantité minimale de solvant(s) approprié(s).Ainsi que déjà mentionné ci-dessus, les isocyanates concernés peuvent être des mono-, di- voire poly-isocyanates. Avantageusement, ces dérivés peuvent contenir des structures de type isocyanurate, encore appelée trimère, des structures urétidine dione, encore appelée dimère, des structures biuret ou allophanate ou une combinaison de ce type de structures sur une seule molécule ou en mélange.

Les isocyanates monomères peuvent être :
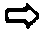 aliphatiques, y compris cycloaliphatiques et arylaliphatiques, tels que :
   - comme aliphatique simples, les polyméthylènediisocyanates et notamment l'hexaméthylène diisocyanate ;
   - comme aliphatique partiellement "néopentylique" partiellement cyclique (cycloaliphatique) l'isophorone diisocyanate (IPDI) ;
   - comme aliphatique cyclique (cycloaliphatique) diisocyanate ceux dérivés du norbornane ;
   - les arylènedialcoylènediisocyanates (tel que OCN-CH₂-Φ-CH₂-NCO dont une partie ne présente pas de différence essentielle d'avec les aliphatiques à savoir ceux dont la fonction isocyanate est distante des noyaux aromatique d'au moins deux carbones tels que (OCN-[CH₂]ₜ-Φ-[CH₂]ᵤ-NCO) avec t et u supérieur à 1 ;
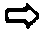 ou encore aromatiques tels que le toluylène diisocyanate.

Les polyisocyanates préférés visés par la technique de l'invention sont ceux dans lesquels au moins une, avantageusement deux, de préférence trois des conditions ci après sont remplies :
- Au moins une, avantageusement au moins deux, des fonctions NCO sont reliées à un squelette hydrocarboné, par l'intermédiaire d'un carbone saturé (sp³), de préférence avec au moins une, plus préférentiellement au moins deux des sous conditions ci- après :
   - Au moins un, avantageusement deux, desdits carbones saturés (sp³) est porteur d'au moins un, avantageusement deux, hydrogène(s),(en d'autre terme il a été trouvé que l'on obtenait de meilleurs résultats lorsque le carbone porteur de la fonction isocyanate était porteur d'un hydrogène, de préférence de deux hydrogènes) ;
- au moins un, avantageusement deux, desdits carbones saturés (sp³) sont eux-mêmes portés par un carbone, avantageusement aliphatique (c'est-à-dire d'hybridation sp³), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;
   - Tous les carbones par l'intermédiaire desquels les fonctions isocyanates sont reliées au squelette hydrocarboné, sont des carbones saturés (sp³), lesquels sont avantageusement en partie, de préférence en totalité, porteurs d'un hydrogène, de préférence de deux hydrogènes ; en outre il est avantageux que lesdits carbones saturés (sp³) soient au moins en partie (avantageusement un tiers, de préférence deux tiers), préférablement en totalité, eux-mêmes portés par un carbone, avantageusement aliphatique (c'est-à-dire d'hybridation sp³), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;
- Sont en particulier bien adaptés ceux qui présentent au moins en partie un squelette isocyanurique ou biuret (que ce squelette soit issu d'un seul ou de plusieurs monomères, voir ci-dessous) et plus précisément des structures de type isocyanurate, encore appelée trimère, des structures urétidinedione, encore appelée dimère, des structures biuret ou allophanate ou une combinaison de ce type de structures sur une seule molécule ou en mélange.

Lorsque les polyisocyanates sont relativement lourds c'est à dire qu'ils comportent au moins 4 fonctions isocyanates, les deux premières conditions deviennent :
- Au moins un tiers, avantageusement deux tiers, des fonctions NCO sont reliées à un squelette hydrocarboné, par l'intermédiaire d'un carbone saturé (sp³) ;
   - Au moins un tiers, avantageusement deux tiers, desdits carbones saturés (sp³) est porteur d'au moins un, avantageusement deux, hydrogène(s),(en d'autre terme il a été trouvé que l'on obtenait de meilleurs résultats lorsque le carbone porteur de la fonction isocyanate était porteur d'un hydrogène, de préférence de deux hydrogènes. ; En outre il est avantageux que lesdits carbones saturés (sp³) soient au moins en partie (avantageusement un tiers, de préférence deux tiers), préférablement en totalité, eux-mêmes portés par un carbone, avantageusement aliphatique (c'est-à-dire d'hybridation sp³), lui-même porteur d'au moins un, avantageusement deux, hydrogène(s) ; en d'autre terme, il a été trouvé que l'on obtenait de meilleurs résultats lorsque le carbone porteur de la fonction isocyanate n'était en position dite "néopentylique" ;
      Un autre but de la présente invention est de fournir un procédé du type précédent qui permette de réaliser la mise en émulsion de la composition visée ci dessus lorsqu'elle ne contient pas d'eau.
      Ce but et d'autres qui apparaîtront par la suite sont atteints au moyen d'un procédé de mise en émulsion qui comporte au moins l'étape suivante :
- ajout, avantageusement sous agitation très modérée, des ou de l'isocyanate dans le mélange polyol + eau.

L'agent tensioactif peut être soit dans la phase aqueuse, soit de préférence dans la phase isocyanate. Dans le premier cas les réactions entre isocyanate et ledit composé comportant une fonction anionique et avantageusement un fragment de chaîne polyéthylène glycol sont beaucoup moins importantes.

Cette agitation est de préférence manuelle ou mécanique.

Cette mise en émulsion est avantageusement menée à une température inférieure à 50°C, de préférence à l'ambiante.

Il est souhaitable de réaliser, si nécessaire, un ajustement du pH (pour atteindre une valeur avantageusement au moins égale à trois, de préférence à 4 et avantageusement au plus égal à 11 de préférence à 10 et donc avantageusement comprise entre 3 et 11, de préférence entre 4 et 10) lors de la mise en émulsion. Cet ajustement permet d'atteindre une zone avantageuse où la première (ou unique) acidité de chaque agent tensioactif selon la présente invention est neutralisée.

Selon une variante avantageuse de la présente invention, les pigments (et notamment le bioxyde de titane) sont dispersés dans le ou les polyols avant l'addition de l'isocyanate.

Un autre but de la présente invention est de fournir un procédé d'application de la composition à base d'isocyanate pour former un revêtement.

Ces buts et d'autres qui apparaîtront par la suite sont atteints au moyen d'un procédé comportant l'application d'une couche de préparation (c'est-à-dire de composition selon l'invention comportant la phase aqueuse et les constituants de la couche) dont l'épaisseur avant séchage est comprise entre 10 et 400 micromètres avantageusement entre 50 et 200 correspondant après séchage à une épaisseur comprise entre 5 et 150 micromètres, avantageusement entre 20 et 80 micromètres.

Selon une mise en oeuvre avantageuse, ce procédé comporte un séchage de 20°C à 60°C pendant une durée pouvant aller de 1/4 à 24 heures.

Avantageusement ce séchage a lieu en présence d'un solvant pour aider à l'élimination de l'eau.

Selon une mise en oeuvre particulièrement avantageuse de la présente invention, l'application est menée par pulvérisation.

La préparation des surfaces est bien connue de l'homme de métier (Par exemple phosphatations pour les composé ferreux acier ou chromatation pour les surface a base d'alumine). (on peut par exemple se référer au ouvrage suivants : "organic coating technology " volume II de H.F. PAYNE et "Paint Handbook" Edité par G.E.WEISMANTEL).

Selon la présente invention, il est ainsi possible d'obtenir des revêtements notamment peintures ou vernis) présentant les caractéristiques techniques (ces valeurs dépendent surtout des polyols utilisés) suivantes :

| mise en oeuvre et caractéristiques du revêtement | | |
|---|---|---|
| épaisseur sèche Iso2178: 45 µm | | |
| support et traitement de celui-ci :acier traité par phosphatation : plaques R461 du fournisseur Q Pannel | | |
| | propriétés minimales obtenues | usuelle |
| test din 67530 (ces valeurs n'ont d'intérêt que lorsque l'on désire une peinture brillante mais non lorsque l'on veut de la peinture mat ou satinée) | | |
| Brillance 20° | 0,5 | 80 |
| 60° | 0,5 | 90 |
| dureté König Iso 1522 | 10s | 150s |
| Adhérence test din 53151 | GT-1 | GT-5 |
| Résistance au chocs test N°iso 6272 direct | 10 cm | >100 cm |
| inverse | 5 cm | >100 cm |
| Résistance à la méthyléthylcétone (butanone) (Double passage) | 20 | >200 |
| Tenue en extérieur QUV Din 53384 | 50 h | 800 h |

Les exemples non limitatifs suivants illustrent l'invention.

### Exemple 1 : synthèse de l'isocyanate HDT dont les fonctions sont complètement transformées en composé selon l'invention (référence CMI 972).

Dans un tricol on charge 114 g de RHODAFAC RE 610. On ajoute ensuite sous agitation, 26,3 g de triéthylamine. La température du milieu réactionnel passe alors de 21,8°C à 39,6°C. On ajoute ensuite à 31,5°C, 30 g de TOLONATE HDT de titre NCO égal à 0,521. La température du milieu réactionnel monte à 37°C.

Après 2 heures de réaction après addition du TOLONATE, la température du milieu réactionnel est de 29,4°C. Une analyse infrarouge d'un prélèvement indique la présence de fonctions isocyanates. Après trois heures de réaction une analyse infrarouge d'un prélèvement indique la présence de fonctions isocyanates libres. On ajoute alors 7g de mélange RHODAFAC RE 610 neutralisé par la triéthylamine dans le même rapport qu'indiqué ci dessus. Après 4h40 de réaction après addition du TOLONATE, une analyse infrarouge d'un prélèvement indique l'absence de fonctions isocyanates libres.

Le produit est alors stocké dans un flacon de 250 ml et est utilisé dans les essais de mise en émulsion aqueuse des polyisocyanates.

### Exemple 2 : mise en émulsion du Produit référencé CMI 972 de composition telle que :

- RE 610 neutralisé par TEA au préalable
- ratio HDT/ RE 610 = 1/1 molaire
   (30 g HDT + 114 g RE610 + 26 g TEA)

le mélange 90/10 (pondéral) HDT / CMI 972 est autoémulsifiable (0,96 µm sympatec).

Les revêtements obtenus à partir de cette émulsion sont de bonne qualité.

## Revendications

1. Composé **caractérisé par le fait qu'**il répond à la formule (I) 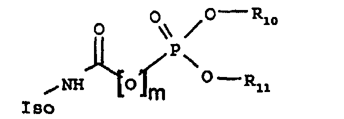
- où m est égal à 0 ou 1,
- où Iso est le reste d'un polyisocyanate après élimination d'une fonction isocyanate
- où R₁₀ est choisi parmi :
· une charge négative ;
· un reste hydrocarboné (c'est-à-dire contenant des atomes d'hydrogène et de carbone) dont le point d'attache [c'est-à-dire l'atome porteur de la liaison ouverte] est un carbone
- où R₁₁ est choisi parmi :
· une charge négative ;
· un groupe de formule II : 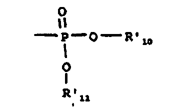
dans laquelle R'₁₀ est choisi parmi les restes hydrocarbonés (semblables ou différents de R₁₀) et une charge négative dont le point d'attache [c'est-à-dire l'atome porteur de la liaison ouverte] est un carbone dans laquelle le(s) R'₁₁ est (sont) choisi(s) parmi les restes hydrocarbonés dont le point d'attache [c'est-à-dire l'atome porteur de la liaison ouverte] est un carbone (semblables ou différents de R₁₀ et de R'₁₁) et une charge négative.

2. Composé selon la revendication 1, **caractérisé par le fait que** Iso porte au moins une autre fonction semblable ou différente

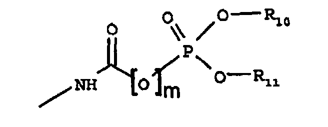

3. Composé selon les revendications 1 et 2, **caractérisé par le fait que** Iso porte au moins deux autres fonctions, semblables ou différentes.

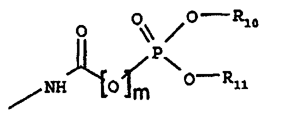

4. Composé selon les revendications 1 à 3, **caractérisé par le fait qu'**il dérive d'un isocyanate dont la totalité des fonctions isocyanates sont transformées en fonctions, semblables ou différentes.

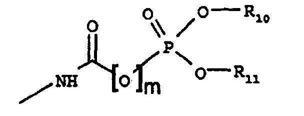

5. Composé selon les revendications 1 à 4, **caractérisé par le fait qu'**il dérive d'un isocyanate dont la totalité des fonctions isocyanates sont transformées en fonctions, semblables ou différentes 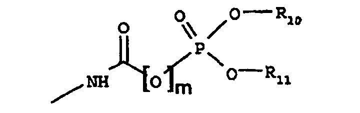 et **par le fait que** l'isocyanate dont il dérive est di-, tri-, tetra-, penta-, hexa-, ou heptafonctionnel en isocyanate, avantageusement trifonctionnel.

6. Composé selon les revendications 1 à 5, **caractérisé par le fait qu'**il dérive des isocyanates aliphatiques.

7. Composé selon les revendications 1 à 6, **caractérisé par le fait qu'**il dérive des prépolymères, des isocyanates aliphatiques difonctionnels.

8. Composé selon la revendication 7, **caractérisé par le fait que** les oligocondensats (ou prépolymères) sont choisis parmi ceux issus de la condensation de polyol en général triol et ceux portant des structures de type isocyanurate, encore appelée trimère, ceux portant des structures urétidine dione, encore appelée dimère, ceux portant des structures biuret ou allophanate et ceux portant une combinaison de ce type de structures sur une seule molécule ou en mélange.

9. Composé selon les revendications 6 à 8, **caractérisé par le fait qu'**il dérive d'isocyanate(s) aliphatique(s) difonctionnel(s) choisi(s) parmi :
- les aliphatiques simples, notamment les polyméthylènediisocyanates et notamment l'hexaméthylène diisocyanate ;
- les aliphatiques partiellement "néopentylique" partiellement cycliques (cycloaliphatiques), notamment l'isophorone diisocyanate (IPDI) ;
- les aliphatiques cycliques (cycloaliphatiques) diisocyanates, notamment ceux dérivés du norbornane (NBDI) ;
- les arylènedialcoylènediisocyanates (tels que OCN-CH₂-□-CH₂-NCO dont une partie ne présente pas de différence essentielle d'avec les aliphatiques, à savoir ceux dont la fonction isocyanate est distante des noyaux aromatiques d'au moins deux carbones tels que (OCN-[CH₂]ₜ-□-[CH₂]ᵤ-NCO) avec t et u supérieur à 1.

10. Composé selon les revendications 6 à 9, **caractérisé par le fait qu'**il dérive d'isocyanate(s) aliphatique(s) difonctionnel(s) choisi(s). parmi les polyméthylènediisocyanates et avantageusement l'hexaméthylène diisocyanate.

11. Composé selon les revendications 6 à 10, **caractérisé par le fait qu'**il dérive des biurets et des trimères des polyméthylènediisocyanates et avantageusement de l'hexaméthylène diisocyanate par remplacement des fonctions isocyanates par les fonctions, semblables ou différentes.

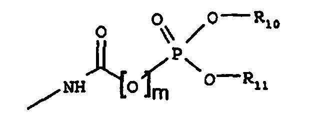

12. Composition comportant notamment :
- une sous-composition vecteur de fonctions isocyanates.
- un agent tensioactif contenant au moins un composé de formule (I) selon l'une des revendications 1 à 11 ;
- optionnellement une phase aqueuse.

13. Composition utile pour réaliser un revêtement selon la revendication 12, **caractérisée par le fait qu'**elle présente par rapport à un volume d'un litre d'isocyanate(s), de 0,01 à 1, avantageusement de 0,05 à 0,5, de préférence de 0,05 à 0,3 équivalent de fonction :

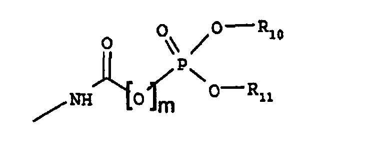

14. Composition selon les revendications 12 et 13, **caractérisée par le fait que** ladite sous composition vecteur de fonctions isocyanate comporte en masse au moins 5%, avantageusement 10% (un chiffre significatif, avantageusement deux), de préférence 15%.de fonction isocyanate.

15. Composition selon les revendications 12 à 14, **caractérisée par le fait que** ladite sous composition vecteur de fonctions isocyanate comporte en masse au plus environ 50%, avantageusement au plus environ 40%, de préférence au plus 30% (un chiffre significatif, avantageusement deux) de fonction isocyanate.

16. Composition selon les revendications 12 à 15, **caractérisée par le fait que** ladite sous composition vecteur de fonctions isocyanate est formée d'isocyanates aliphatiques.

17. Composition selon les revendications 12 à 16, **caractérisée par le fait que** ladite sous composition vecteur de fonctions isocyanate est formée.

18. Composition selon les revendications 12 à 17, **caractérisée par le fait qu'**elle comporte en outre une phase aqueuse.

19. Procédé de préparation d'un revêtement, **caractérisé par le fait qu'**il comporte l'application d'une couche d'une composition selon les revendications 12 à 18.

20. Procédé selon la revendication 19, **caractérisé par le fait qu'**il comporte un séchage à une température de 20°C à 50°C pendant 1/4 et 3 heures.

21. Procédé selon les revendications 19 et 20, **caractérisé par le fait qu'**il comporte un séchage en présence d'un solvant pour aider à l'élimination de l'eau.

22. Procédé selon les revendications 19 à 21, **caractérisé par le fait que** la couche est appliquée par pulvérisation, ou au moyen d'applicateur à tige filetée.

23. Revêtement susceptible d'être obtenu par un procédé selon l'une des revendications 19 à 22.

## Patentansprüche

1. Verbindung, **dadurch gekennzeichnet, dass** sie der Formel (I) entspricht 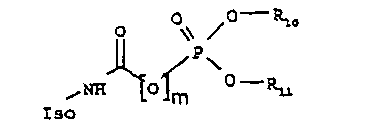
- worin m gleich 0 oder 1 ist,
- worin Iso der Rest eines Polyisocyanats nach Entfernung einer Isocyanatfunktion ist,
- worin R₁₀ ausgewählt ist unter:
• einer negativen Ladung;
• einem Kohlenwasserstoffrest (das heißt mit Wasserstoff- und Kohlenstoffatomen), dessen Verknüpfungspunkt [das heißt das Atom, das die offene Bindung trägt] ein Kohlenstoff ist,
- worin R₁₁ ausgewählt ist unter:
• einer negativen Ladung;
• einer Gruppe der Formel II: 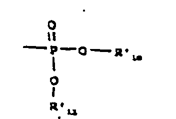 in der R'₁₀ ausgewählt ist unter den Kohlenwasserstoffresten (ähnlich wie oder verschieden von R₁₀) und einer negativen Ladung, deren Verknüpfungspunkt [das heißt das Atom, das die offene Bindung trägt] ein Kohlenstoff ist, in der (die) R'₁₁ ausgewählt ist(sind) unter den Kohlenwasserstoffresten, deren Verknüpfungspunkt [das heißt das Atom, das die offene Bindung trägt] ein Kohlenstoff ist (ähnlich wie oder verschieden von R₁₀ und R'₁₁) und einer negativen Ladung.

2. Verbindung gemäß Anspruch 1, **dadurch gekennzeichnet, dass** Iso wenigstens eine weitere Funktion trägt, die ähnlich ist wie oder verschieden ist von

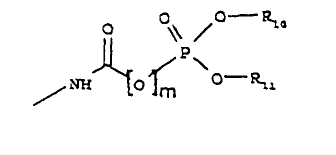

3. Verbindung gemäß den Ansprüchen 1 und 2, **dadurch gekennzeichnet, dass** Iso wenigstens zwei weitere Funktionen trägt, die ähnlich sind wie oder verschieden sind von

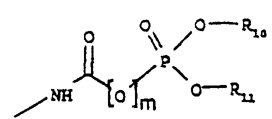

4. Verbindung gemäß den Ansprüchen 1 bis 3, **dadurch gekennzeichnet, dass** sie von einem Isocyanat abgeleitet ist, dessen gesamte Isocyanatfunktionen in Funktionen umgewandelt sind, die ähnlich sind wie oder verschieden sind von

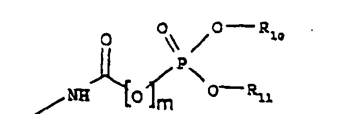

5. Verbindung gemäß den Ansprüchen 1 bis 4, **dadurch gekennzeichnet, dass** sie von einem Isocyanat abgeleitet ist, dessen gesamte Isocyanatfunktionen in Funktionen umgewandelt sind, die ähnlich sind wie oder verschieden sind von 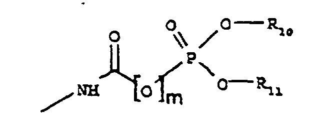 und dadurch, dass das Isocyanat, von dem sie abgeleitet ist, ein di-, tri-, tetra-, penta-, hexa- oder heptafunktionelles, vorzugsweise trifunktionelles Isocyanat ist.

6. Verbindung gemäß den Ansprüchen 1 bis 5, **dadurch gekennzeichnet, dass** sie von den aliphatischen Isocyanaten abgeleitet ist.

7. Verbindung gemäß den Ansprüchen 1 bis 6, **dadurch gekennzeichnet, dass** sie von den Präpolymeren der difunktionellen aliphatischen Isocyanate abgeleitet ist.

8. Verbindung gemäß Anspruch 7, **dadurch gekennzeichnet, dass** die Oligokondensate (oder Präpolymere) unter denjenigen ausgewählt sind, die hervorgegangen sind aus der Kondensation von Polyol, im Allgemeinen Triol, und denen, die Strukturen vom Isocyanurat-Typ tragen, auch Trimer genannt, denen, die Uretidindion-Strukturen tragen, auch Dimer genannt, denen, die Biuret- oder Allophanat-Strukturen tragen, und denen, die eine Kombination dieses Typs von Strukturen an einem einzigen Molekül oder im Gemisch tragen.

9. Verbindung gemäß den Ansprüchen 6 bis 8, **dadurch gekennzeichnet, dass** sie abgeleitet ist von difunktionellem(n) aliphatischem(n) Isocyanat(en), das(die) ausgewählt ist(sind) unter:
- den einfachen aliphatischen, insbesondere den Polymethylendiisocyanaten und insbesondere Hexamethylendiisocyanat;
- den teilweise "neopentylischen"aliphatischen, teilweise cyclischen (cycloaliphatischen), insbesondere Isophorondiisocyanat (IPDI);
- den cyclischen aliphatischen (cycloaliphatischen) Diisocyanaten, insbesondere denjenigen, die von Norbornan (NBDI) abgeleitet sind;
- den Arylendialkylendiisocyanaten (wie OCN-CH₂-□-CH₂-NCO, von denen ein Teil keinen wesentlichen Unterschied mit den aliphatischen aufweist, nämlich diejenigen, bei denen die Isocyanatfunktion von den aromatischen Kernen wenigstens zwei Kohlenstoffe entfernt ist, wie (OCN-[CH₂]ₜ-□-[CH₂]ᵤ-NCO) mit t und u größer als 1.

10. Verbindung gemäß den Ansprüchen 6 bis 9, **dadurch gekennzeichnet, dass** sie von difunktionellem(n) aliphatischem(n) Isocyanat(en) abgeleitet ist, das(die) unter den Polymethylendiisocyanaten und vorteilhafterweise Hexamethylendiisocyanat ausgewählt ist(sind).

11. Verbindung gemäß den Ansprüchen 6 bis 10, **dadurch gekennzeichnet, dass** sie abgeleitet ist von den Biureten und den Trimeren der Polymethylendiisocyanate und vorteilhafterweise von Hexamethylendiisocyanat durch Ersetzen der Isocyanatfunktionen durch Funktionen, die ähnlich sind wie oder verschieden sind von

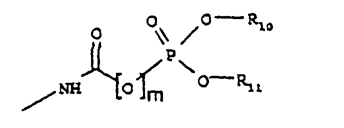

12. Zusammensetzung, die insbesondere umfasst:
- eine Vektor-Teilzusammensetzung, die Isocyanatfunktionen trägt,
- ein Tensid, das wenigstens eine Verbindung der Formel (I) gemäß einem der Ansprüche 1 bis 11 enthält;
- gegebenenfalls eine wässrige Phase.

13. Für die Herstellung einer Beschichtung geeignete Zusammensetzung gemäß Anspruch 12, **dadurch gekennzeichnet, dass** sie aufweist, bezogen auf ein Volumen von einem Liter Isocyanat(e), 0,01 bis 1, vorteilhafterweise 0,05 bis 0,5, vorzugsweise 0,05 bis 0,3 Äquivalente an Funktion:

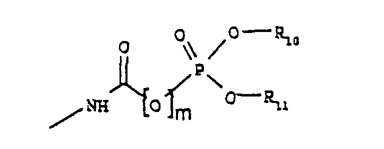

14. Zusammensetzung gemäß den Ansprüchen 12 und 13, **dadurch gekennzeichnet, dass** besagte Vektor-Teilzusammensetzung, die Isocyanatfunktionen trägt, in der Masse wenigstens 5%, vorteilhafterweise 10% (eine, vorteilhafterweise zwei signifikante Ziffern), vorzugsweise 15% an Isocyanatfunktion umfasst.

15. Zusammensetzung gemäß den Ansprüchen 12 bis 14, **dadurch gekennzeichnet, dass** besagte Vektor-Teilzusammensetzung, die Isocyanatfunktionen trägt, in der Masse höchstens etwa 50%, vorteilhafterweise höchstens etwa 40%, vorzugsweise höchstens 30% (eine, vorteilhafterweise zwei signifikante Ziffern) an Isocyanatfunktion umfasst.

16. Zusammensetzung gemäß den Ansprüchen 12 bis 15, **dadurch gekennzeichnet, dass** besagte Vektor-Teilzusammensetzung, die Isocyanatfunktionen trägt, aus aliphatischen Isocyanaten gebildet wird.

17. Zusammensetzung gemäß den Ansprüchen 12 bis 16, **dadurch gekennzeichnet, dass** besagte Vektor-Teilzusammensetzung, die Isocyanatfunktionen trägt, gebildet wird.

18. Zusammensetzung gemäß den Ansprüchen 12 bis 17, **dadurch gekennzeichnet, dass** sie außerdem eine wässrige Phase umfasst.

19. Verfahren zur Herstellung einer Beschichtung, **dadurch gekennzeichnet, dass** es das Aufbringen einer Schicht einer Zusammensetzung gemäß den Ansprüchen 12 bis 18 umfasst.

20. Verfahren gemäß Anspruch 19, **dadurch gekennzeichnet, dass** es ein Trocknen bei einer Temperatur von 20°C bis 50°C 1/4 bis 3 Stunden lang umfasst.

21. Verfahren gemäß den Ansprüchen 19 und 20, **dadurch gekennzeichnet, dass** es ein Trocknen in Gegenwart eines Lösungsmittels, um die Entfernung des Wassers zu unterstützen, umfasst.

22. Verfahren gemäß den Ansprüchen 19 bis 21, **dadurch gekennzeichnet, dass** die Schicht durch Sprühen oder mittels einer Vorrichtung zum Auftragen mit Schraubenspindel aufgetragen wird.

23. Beschichtung, die durch ein Verfahren gemäß einem der Ansprüche 19 bis 22 erhalten werden kann.

## Claims

1. Compound, **characterized in that** it corresponds to formula (I) 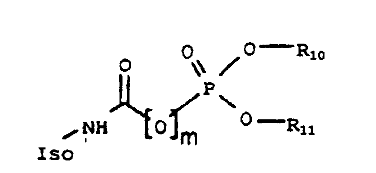
- in which m is equal to 0 or 1;
- in which Iso is a (poly)isocyanate residue (after removal of an isocyanate function);
- in which R₁₀ is chosen from:
• a negative charge;
• a hydrocarbon-based residue (i.e. a residue containing hydrogen and carbon atoms) whose point of attachment [i.e. the atom bearing the open bond] is a carbon;
- in which R₁₁ is chosen from:
• a negative charge;
• a group of formula II: 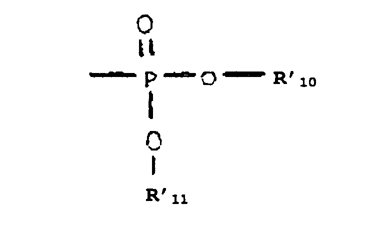
in which R'₁₀ is chosen from hydrocarbon-based residues (similar to or different from R₁₀) and a negative charge whose point of attachment [i.e. the atom bearing the open bond] is a carbon in which R'₁₁ is (are) chosen from hydrocarbon-based residues whose point of attachment [i.e. the atom bearing the open bond] is a carbon (similar to or different from R₁₀ and R'₁₁) and a negative charge.

2. Compound according to Claim 1, **characterized in that** Iso bears at least one other similar or different function

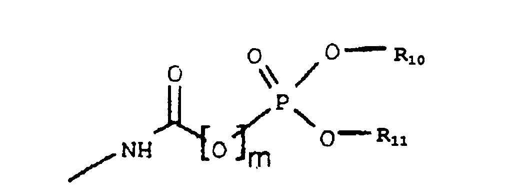

3. Compound according to Claims 1 and 2, **characterized in that** Iso bears at least two other similar or different functions

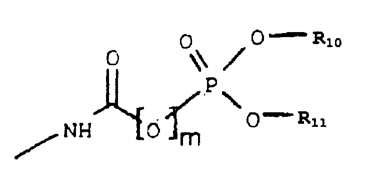

4. Compound according to Claims 1 to 3, **characterized in that** it is derived from an isocyanate, all of the isocyanate functions of which are converted into similar or different functions

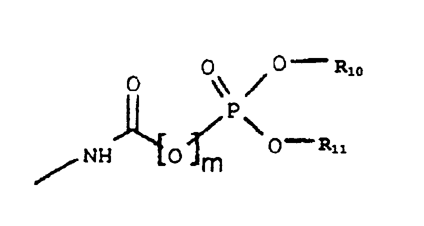

5. Compound according to Claims 1 to 4, **characterized in that** it is derived from an isocyanate, all of the isocyanate functions of which are converted into similar or different functions 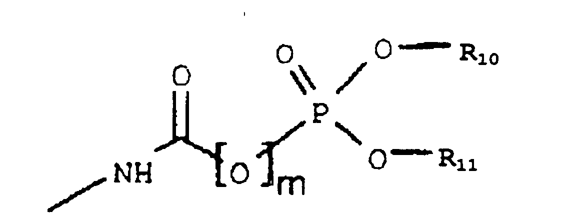 and **in that** the isocyanate from which it is derived is di-, tri-, tetra-, penta-, hexa- or heptafunctional with isocyanate, advantageously trifunctional.

6. Compound according to Claims 1 to 5, **characterized in that** it is derived from aliphatic isocyanates.

7. Compound according to Claims 1 to 6, **characterized in that** it is derived from prepolymers of difunctional aliphatic isocyanates.

8. Compound according to Claim 7, **characterized in that** the oligocondensates (or prepolymers) are chosen from those derived from the condensation of polyol, in general triol, and those bearing structures such as isocyanurate, also known as trimer, those bearing uretidine dione structures, also known as dimer, those bearing biuret or allophanate structures and those bearing a combination of structures of this type on a single molecule or as a mixture.

9. Compound according to Claims 6 to 8, **characterized in that** it is derived from difunctional aliphatic isocyanate(s) chosen from:
- simple aliphatic, in particular polymethylene diisocyanates and in particular hexamethylene diisocyanate;
- partially aliphatic "neopentyl" partially cyclic (cycloaliphatic), in particular isophorone diisocyanate (IPDI);
- cyclic aliphatic (cycloaliphatic) diisocyanates, in particular those derived from norbornane (NBDI);
- arylenedialkylene diisocyanates (such as OCN-CH₂-Φ-CH₂-NCO, a portion of which shows no essential difference from the aliphatics, i.e. those whose isocyanate function is remote from the aromatic rings by at least two carbons, such as (OCN-[CH₂]ₜ-Φ-[CH₂]ᵤ-NCO) with t and u greater than 1.

10. Compound according to Claims 6 to 9, **characterized in that** it is derived from difunctional aliphatic isocyanate(s) chosen from polymethylene diisocyanates and advantageously hexamethylene diisocyanate.

11. Compound according to Claims 6 to 10, **characterized in that** it is derived from biurets and from trimers of polymethylene diisocyanates and advantageously hexamethylene diisocyanate, by replacement of the isocyanate functions with similar or different functions

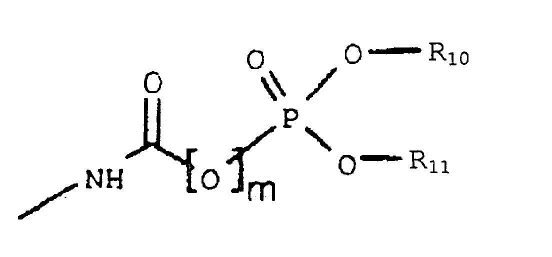

12. Composition comprising, in particular:
- a sub-composition which is a vector of isocyanate functions;
- a surfactant containing at least one compound of formula (I) according to one of Claims 1 to 11;
- optionally, an aqueous phase.

13. Composition which is useful for preparing a coating according to Claim 12, **characterized in that** it contains, relative to a volume of one litre of isocyanate(s), from 0.01 to 1, advantageously from 0.05 to 0.5 and preferably from 0.05 to 0.3, equivalent of function:

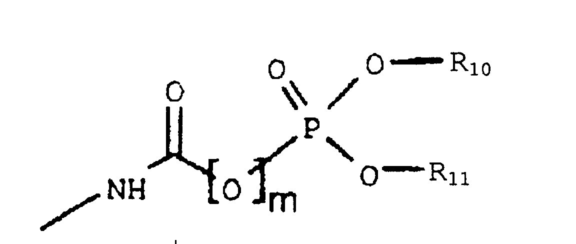

14. Composition according to Claims 12 and 13, **characterized in that** the said sub-composition which is a vector of isocyanate functions comprises, on a mass basis, at least 5%, advantageously 10% (one significant figure, advantageously two), preferably 15% of isocyanate function.

15. Composition according to Claims 12 to 14, **characterized in that** the said sub-composition which is a vector of isocyanate functions comprises, on a mass basis, not more than about 50%, advantageously not more than about 40%, preferably not more than 30% (one significant figure, advantageously two), of isocyanate function.

16. Composition according to Claims 12 to 15, **characterized in that** the said sub-composition which is a vector of isocyanate functions is formed from aliphatic isocyanates.

17. Composition according to Claims 12 to 16, **characterized in that** the said sub-composition which is a vector of isocyanate functions is formed [lacuna].

18. Composition according to Claims 12 to 17, **characterized in that** it also comprises an aqueous phase.

19. Process for preparing a coating, **characterized in that** it comprises the application of a coat of a composition according to Claims 12 to 18.

20. Process according to Claim 19, **characterized in that** it comprises a drying operation at a temperature of 20°C to 50°C for 1/4 to 3 hours.

21. Process according to Claims 19 and 20, **characterized in that** it comprises a drying operation in the presence of a solvent to assist the removal of water.

22. Process according to Claims 19 to 21, **characterized in that** the coat is applied by spraying or by means of a screw-rod applicator.

23. Coating which can be obtained by a process according to one of Claims 19 to 22.
